# EUROPÄISCHE PATENTSCHRIFT

(11) **EP 0 361 217 B1**
(45) Veröffentlichungstag und Bekanntmachung des Hinweises auf die Patenterteilung: **30.03.1994**
(21) Anmeldenummer: 89116991.4
(22) Anmeldetag: 14.09.1989
(51) Int. Cl.: B01D 35/12, B01D 35/18, B01D 29/11, B01D 29/52, B01D 29/66, B01D 29/94

(54) **Rückspülfilter**
Brack-wash filter
Filtre à rinçage à contre-courant

(30) Priorität: 27.09.1988 DE 3832679
(43) Veröffentlichungstag der Anmeldung: 04.04.1990
(73) Patentinhaber: Boll & Kirch Filterbau GmbH, D-50170 Kerpen (DE)
(72) Erfinder: Rott, Willi, D-5303 Bornheim 4 (DE); Sindorf, Heinz, D-4049 Rommerskirchen 1 (DE); Lennartz, Rüdiger, Dipl.-Ing., D-5024 Pulheim (DE)
(74) Vertreter: Vollbach, Hans, Dipl.-Ing.

(56) Entgegenhaltungen:
- EP-A- 0 046 919
- DE-A- 3 115 716
- US-A- 3 394 735
- US-A- 4 256 583

## Beschreibung

Die Erfindung betrifft einen Rückspülfilter entsprechend der im Oberbegriff des Patentanspruchs 1 angegebenen Bauart.

Aus der DE-A-1 801 441 ist ein Rückspülfilter dieser Art bekannt, bei dem die einzelnen Filterkammern mit den aus Filterkerzen bestehenden Filtereinsätzen auf der Oberseite des mit dem Filtereinlaß, dem Filterauslaß und dem Schlammablaß versehenen Grundgehäuses stehend angeordnet sind, das als Schaltgehäuse das aus einem axial angeordneten Drehschieber bestehende Schaltorgan aufnimmt. Die mit ihrem Fuß an der Oberseite des Schaltgehäuses angeflanschten Gehäusehauben der Filterkammern ragen verhältnismäßig weit nach oben auf, so daß sich eine entsprechend große Bauhöhe des Rückspülfilters ergibt und für das Lösen und Abziehen der langen Gehäusehauben vom Schaltgehäuse z.B. zu Wartungszwecken u.dgl. eine verhältnismäßig große Freihöhe über dem Rückspülfilter benötigt wird. Beim Abziehen der langen Gehäusehauben nach oben besteht die Gefahr einer Beschädigung der Filterkerzen. Der bekannte Rückspülfilter baut auch vergleichsweise breit, da die Filterkammern in verhältnismäßig großem Seitenabstand zu der Gehäuseachse bzw. zur Drehachse des Schaltorgans angeordnet werden müssen. Dies ist vor allem deswegen erforderlich, weil der Druckgas-Speicherbehälter, der die für die Rückspülung benötigte Spülluft aufnimmt und daher eine ausreichend große Speicherkapazität erhalten muß, als Kopfgehäuse auf das Schaltgehäuse aufgesetzt ist, und weil außerdem das der Spülluftzuführung dienende Spülventil und das Schlammablaßventil mit dem Schaltorgan baulich vereinigt sind.

Dies führt außerdem zu einem verwickelten Gesamtaufbau des Rückspülfilters, zu einer verwickelten Formgestaltung des Schaltgehäuses, dessen Herstellung als Gußgehäuse infolgedessen mit erheblichem Kostenaufwand verbunden ist, und schließlich auch zu verhältnismäßig engen inneren Strömungsquerschnitten und großen Längen der Strömungskanäle. Reparatur- und Wartungsarbeiten erfordern häufig ein vollständiges Auseinanderbauen des Rückspülfilters, da die verschiedenen Funktionsteile von außen nicht ohne weiteres zugänglich sind.

Aus der EP-A-0 046 919 ist ein Mehrkammerfilter bekannt, dessen die aus Kerzenfilter bestehenden Filtereinsätze aufnehmende Kammern von Gehäusehauben gebildet werden, die mit dem gemeinsamen Schaltgehäuse lösbar verbunden sind. Dabei ist die Anordnung so getroffen, daß die Filtereinsätze mit ihrem unteren Ende in das Schaltgehäuse eintauchen, wobei die Trennebene zwischen dem Schaltgehäuse und den Gehäusehauben der Filterkammern im Abstand oberhalb der unteren Enden der Filtereinsätze liegt. Am und im Schaltgehäuse sind mehrere gesondert zu betätigende Ventilhähne übereinander angeordnet und so in die Flüssigkeitswege eingeschaltet, daß die Kerzenfilter bei der Inbetriebnahme völlig entgast werden und im Betrieb stets ein Kerzenfilter mit entgaster gefilterter Flüssigkeit zur Verfügung steht, wenn ein zweiter Kerzenfilter gereinigt wird. Der Mehrkammerfilter weist im übrigen kein am Schaltgehäuse angeordnetes Schlammablaßventil und auch kein nach Art eines Drehschiebers ausgebildetes Schaltorgan auf, das im Schaltgehäuse einen Trüberaum von einem Filtratraum trennt. Die Filterreinigung erfolgt auch nicht mit druckgasbeaufschlagtem Spülfiltrat.

Aufgabe der Erfindung ist es vor allem, den Rückspülfilter der eingangs genannten Art, der vor allem für die Filterung von Schmieröl, Dieselöl, Schweröl, Kühlschmiermitteln und Emulsionen u.dgl. bestimmt ist, so auszugestalten, daß er sich auch bei hohen Filterleistungen mit geringerem Herstellungsaufwand und mit vergleichweise kompakten Bauabmessungen fertigen läßt.

Die vorgenannte Aufgabe wird erfindungsgemäß mit den im Kennzeichen des Patentanspruchs 1 angegebenen Merkmalen gelöst.

Bei dem erfindungsgemäßen Rückspülfilter weist das Schaltgehäuse einen oberhalb des Filtratraumes angeordneten Trüberaum auf. Dabei ist die Anordnung so getroffen, daß die Filtereinsätze bis mindestens etwa in Höhe des Trüberaumes in das Schaltgehäuse eintauchen, wobei die Trennebene zwischen dem Schaltgehäuse und den Gehäusehauben der Filterkammern im Abstand oberhalb der unteren Enden der Filtereinsätze liegt. Da das Schaltgehäuse mit dem nach Art eines Drehschiebers ausgebildeten, den oberen Trüberaum von dem unteren Filtratraum trennenden Schaltorgan zugleich Teil des Aufnahmegehäuses für die in es eintauchenden Filtereinsätze bildet, die vorzugsweise aus Gruppen von Filterkerzen bestehen, läßt sich die Bauhöhe des Rückspülfilters erheblich vermindern. Zugleich können kürzere und entsprechend leichtere Gehäusehauben verwendet werden. Die für das Abziehen der Gehäusehauben erforderliche Freihöhe über dem Rückspülfilter kann kleiner sein. Außerdem ist die Gefahr einer Beschädigung der Filtereinsätze beim Abziehen der Gehäusehauben geringer. Von besonderem Vorteil ist in diesem Zusammenhang auch, daß das Schlammablaßventil zusammen mit seiner Betätigungsvorrichtung unterhalb des Trübeeinlasses und des Filtratauslasses am Schlammauslaß angeordnet ist, vorzugsweise in Horizontallage an der Unterseite des Schaltgehäuses. Die Verlegung des Schlammablaßventils in den Fußbereich des Rückspülfilters trägt zur Verminderung des Bauvolumens desselben, d.h. vor allem zur Verminderung der Querabmessungen seines Schaltgehäuses bei, da das Schlammablaßventil mit seiner Betätigungsvorrichtung von dem Schaltventil baulich getrennt ist und dieses entsprechend einfacher und auch mit kleineren Abmessungen gebaut werden kann. Eine Horizontallage des Schlammablaßventils ist auch im Hinblick auf eine möglichst kleine Bauhöhe des Rückspülfilters vorteilhaft. Der den Schlammablaß bildende Gehäusekanal kann für die Aufnahme des Schlammablaßventils günstig genutzt werden. Außerdem ist das Schlammablaßventil leichter zugänglich, so daß sich Wartungsarbeiten ohne umständliche Zerlegung des Rückspülfilters rasch und einfach durchführen lassen. Weitere Vorteile ergeben sich dadurch, daß bei dem erfindungsgemäßen Rückspülfilter im Schaltgehäuse ein in offener Verbindung mit dem Filtratraum stehender, das Schaltorgan umschließender und an die äußere Druckgaszuführung angeschlossener Umfangsraum oberhalb der Stellen angeordnet ist, an denen die zu den Filterkammern führenden Anschlußkanäle an den Filtratraum anschließen. Damit wird vermieden, daß beim Rückspülvorgang das Druckgas durch das Schaltventil hindurch in die rückzuspülende Filterkammer eingeleitet werden muß. Ein im Inneren des Schaltorgangs angeordnetes, aus einem Kolbenschieber od.dgl. bestehendes Spülventil kann entfallen, so daß das Schaltorgan von diesem Einbauteil frei ist und sein Strömungsquerschnitt uneingeschränkt für den zum Schlammablaßventil führenden Rückspülstrom zur Verfügung steht. Mit den vorgenannten Maßnahmen ergeben sich daher erhebliche Bau- und Wartungsvereinfachungen bei zugleich kompakter Bauweise des Rückspülfilters. Zugleich ergeben sich kürzere und in ihrem Verlauf günstigere innere Strömungswege, da die Filtereinsätze näher an das Schaltventil und den Trübe- bzw. Filtratraum des Schaltgehäuses herangerückt werden können. Die zu reinigende Trübe kann im Filterbetrieb vom Trübeeinlaß auf kürzestem Wege den Filterkammern zugeführt werden, wobei sie die Filtereinsätze von außen nach innen durchströmt und als Filtrat über vergleichsweise große Abflußquerschnitte abgeleitet werden kann.

Besonders vorteilhaft im Hinblick auf den fertigungstechnisch einfachen Gesamtaufbau, die raumsparende Bauweise, die vereinfachte Wartung und die günstige Querschnittsbemessung der Innenkanäle des erfindungsgemäßen Rückspülfilters ist es weiterhin, wenn auf den über das Schaltventil gesetzten, von der Welle des Schaltventils durchgriffenen Druckgas-Speicherbehälter verzichtet und der Speicherbehälter stattdessen an anderer Stelle, wo er nicht stört, z.B. außen am Gehäuse angebaut wird. Dies gestattet es, den Schaltantrieb für das Schaltorgan unmittelbar auf das Schaltgehäuse zu setzen, vorzugsweise auf einen von der Welle des Schaltorgangs unter Abdichtung durchgriffenen Kopfdeckel, der lösbar am Schaltgehäuse angeschlossen wird, und zwar zweckmäßig in der Trennebene zwischen dem Schaltgehäuse und den Gehäusehauben der Filterkammern, ggf. aber auch höhenversetzt zu dieser Trennebene. Falls am Einsatzort des Rückspülfilters Druckluftzuführungsleitungen mit für den Spülvorgang ausreichend großem Querschnitt zur Verfügung stehen, kann ggf. auch auf den Druckgas-Speicherbehälter ganz verzichtet werden. Das der Druckgaszuführung (Spülluftzuführung) dienende Spülventil kann vom Schaltorgan baulich getrennt an der Außenseite des Schaltgehäuses, ggf. in Zuordnung zu dem Druckgas-Speicherbehälter, angeordnet werden. Es kann aus einem einfachen druckluftbetätigten Kolbenventil bestehen. Das Spülventil (Luftzuführungsventil) und das Schlammablaßventil sind demgemäß vom Schaltorgan baulich getrennte Einheiten und jeweils gesondert steuerbar. Das Spülventil wie auch das Schlammablaßventil werden zweckmäßig so gestaltet, daß eine Vermischung von Spülgas (Spülluft) und Öl bei Druckausfall nicht möglich ist.

Der das Schaltorgan umschließende und an die äußere Druckgaszuführung (Spülluftzuführung) anschließbare Umfangsraum ermöglicht es, die auf der Sauberseite im Filtratraum für die Rückspülung befindliche Filtratflüssigkeit auf vergleichsweise großer Fläche mit dem Druckgas zu beaufschlagen, wodurch das Spülfiltrat schlagartig beschleunigt und mit einem kräftigen Druckimpuls im Gegenstrom durch die Filtereinsätze gedrückt wird. Damit läßt sich auch eine durchgreifende Reinigung der Filtereinsätze im Rückspülbetrieb erreichen.

Weitere vorteilhafte Ausgestaltungsmerkmale des erfindungsgemäßen Rückspülfilters sind in den Ansprüchen angegeben. Die Filtereinsätze können um mindestens etwa 1/3 bis 1/2 ihrer Länge in das Schaltgehäuse eintauchen, so daß sich entsprechend kleine Abmessungen der Gehäusehauben ergeben. Das Schlammablaßventil kann in einem mit dem Schaltgehäuse, vorzugsweise durch Verschraubung, lösbar verbundenen Gehäuseunterteil angeordnet sein, wodurch sich ebenfalls Bauvereinfachungen ergeben. Im übrigen kann für das Schlammablaßventil ein einfaches, druckluftbetätigtes Kolbenventil verwendet werden, das als Baueinheit an dem mit dem Schlammablaß versehenen Schaltgehäuse oder aber an dem hieran angeschlossenen Gehäuseunterteil angebaut wird, so daß es sich im Bedarfsfall leicht lösen und seitlich abziehen läßt. Das Schlammablaßventil kann als Kolbenventil mit Druckausgleich ausgebildet werden, so daß auch bei Ausfall der Luftversorgung und anstehendem Öldruck im Filter das Ventil nicht von selbst öffnet. Zur Erleichterung der Wartung des Schlammablaßventils kann dieses ohne weiteres so gestaltet werden, daß sich die dynamisch beanspruchten Dichtungen leicht entfernen und ersetzen lassen.

In weiterer vorteilhafter Ausgestaltung des erfindungsgemäßen Rückspülfilters sind die Filtereinsätze jeweils mit einem Halter verbunden, der im Abstand unterhalb der Trennebene zwischen dem Schaltgehäuse und den Gehäusehauben in Halterlagern des Schaltgehäuses, vorzugsweise in Gestalt von Steckfassungen od.dgl., unter Abdichtung nach oben abhebbar abgestützt sind, so daß sich der gesamte Filtereinsatz einer Filterkammer, ohne Schraubenverbindungen od.dgl. am Halter lösen zu müssen, nach Entfernen der Gehäusehauben nach oben aus dem Schaltgehäuse herausheben läßt. Die Anordnung wird hierbei zweckmäßig so getroffen, daß die Halter nach oben über die Trennebene zwischen dem Schaltgehäuse und den Gehäusehauben bis in die Gehäusehauben aufragen, die mit sich von oben gegen die Halter legenden Anschlägen od.dgl. versehen sind, so daß beim Anbau der Gehäusehauben die Halter mit den daran angebauten Filtereinsätzen zuverlässig festgelegt werden. Vorzugsweise werden die Halter nach Art eines Korbes ausgebildet. Die korbförmigen Halter bestehen dabei zweckmäßig aus einem den Filtereinsatz tragenden, im Halterlager des Schaltgehäuses abgestützten Fußstück und einem den Filtereinsatz umschließenden Kopfring sowie das Fußstück und den Kopfring verbindenden axialen Stegteilen. Wie erwähnt, werden für die Filtereinsätze vorzugsweise Filterkerzen verwendet, wobei jede Filterkammer eine Gruppe an Filterkerzen aufnimmt. Die Filterkerzen können mit ihren Fußenden z.B. durch Verschraubung am Halter bzw. an dessen Fußstück angeschlossen werden. Die Halter können gleichzeitig als Schutz für die Filterkerzen beim Ausbau aus dem Schaltgehäuse dienen.

Bei den bekannten Rückspülfiltern konnte festgestellt werden, daß die Spülwirkung dadurch deutlich herabgesetzt wird, daß beim Einleiten des Rückspülvorgangs innerhalb des Filters noch ein Restdruck in der Größenordnung von etwa 1 bar vorhanden ist, so daß die Rückspülung gegen diesen Restdruck durchgeführt werden muß. Um diesen Nachteil zu vermeiden und die Spülwirkung deutlich zu verbessern, ist nach einem weiteren wesentlichen Erfindungsmerkmal im Schaltorgan ein im Spülbetrieb über das geöffnete Schlammablaßventil mit dem Schlammauslaß in Verbindung stehender Luftpufferraum angeordnet. Die in diesem Pufferraum befindliche Luft wird durch den Innendruck im Filter komprimiert, so daß sie beim Öffnen des Schlammablaßventils die beim Rückspülvorgang auf der Abströmseite der Filterkammer befindliche Flüssigkeit schlagartig in den Schlammablaß austreibt, wodurch der vorgenannte, die Spülwirkung beeinträchtigende Gegendruck abgebaut wird, so daß beim Rückspülvorgang praktisch eine Rückspülung gegen den atmosphärischen Druck erfolgt. Die Rückspülwirkung wird damit erheblich verbessert. Vorzugsweise wird hier die Anordnung so getroffen, daß der Luftpufferraum von einem Kopfraum des Schaltorgans gebildet ist und mit dem der Schlammableitung dienenden axialen Innenkanal des Schaltorgans verbunden ist, wobei der Luftpufferraum sich oberhalb der den axialen Innenkanal mit der rückzuspülenden Filterkammer verbindenden umfangsseitigen Steueröffnung angeordnet ist. Die Anordnung des Luftpufferraums im Schaltorgan läßt sich mit besonderem Vorteil bei der beschriebenen baulichen Trennung des Schlammablaßventils und des Spülventils vom Schaltorgan verwirklichen, auch dann, wenn die in den Filterkammern angeordneten Filtereinsätze nicht in das Schaltgehäuse eintauchen. Insofern kommt der den Luftpufferraum im Schaltorgan betreffenden Gestaltungsform unabhängige erfinderische Bedeutung zu. Der genannte Luftpufferraum, der bei Einleitung des Rückspülvorgangs zu einer Entspannung und Teilentleerung der zu spülenden Filterkammer beiträgt, braucht nicht an einer eigenen Luftzuführung angeschlossen zu werden, da sich die Luft in diesem Raum beim Auffüllen der rückgespülten Filterkammern fängt. Andererseits besteht aber auch die Möglichkeit, in den genannten Pufferraum von außen Druckgas bzw. Druckluft einzuführen.

Als Schaltantrieb für das genannte Schaltorgan können unterschiedliche Antriebe Verwendung finden, vorzugsweise entweder ein Elektromotor oder aber ein pneumatischer Schwenk- bzw. Drehantrieb. Die Außenkontur des Schaltgehäuses wird zweckmäßig so ausgeführt, daß an ihm, falls erforderlich, Heizelemente, die der Gehäusekontur an der Anschlußstelle angepaßt sind, angeschlossen werden können, z.B. durch Verschrauben. Damit entfällt auch ein größerer Verrohrungsaufwand.

Es versteht sich, daß der erfindungsgemäße Rückspülfilter auch mehr als nur zwei Filterkammern, z.B. bis zu acht Filterkammern aufweisen kann, von denen sich jeweils eine Filterkammer im Rückspülbetrieb befindet, während die anderen Filterkammern auf Filterbetrieb geschaltet sind. Während des Filterbetriebs steht also immer eine abgereinigte und entlüftete Filterkammer in Reserve. Der erfindungsgemäße Rückspülfilter eignet sich für den vollautomatischen Betrieb, wobei die Umschaltung von Filterbetrieb auf Rückspülbetrieb und umgekehrt differenzdruckabhängig, ggf. aber auch zeitabhängig gesteuert durchgeführt werden kann.

Die Erfindung wird nachfolgend im Zusammenhang mit dem in der Zeichnung gezeigten Ausführungsbeispiel eines Rückspülfilters näher erläutert. In der Zeichnung zeigen:
- Fig. 1: einen erfindungsgemäßen Rückspülfilter im Vertikalschnitt durch das Gehäuse und durch eine Filterkammer;
- Fig. 2: den Rückspülfilter nach Fig. 1 in einer Ansicht in Richtung des Pfeiles II der Fig. 1;
- Fig. 3: den Rückspülfilter in Draufsicht;
- Fig. 4: eine Einzelheit im Schnitt nach Linie IV-IV der Fig. 2;
- Fig. 5: eine Einzelheit im Schnitt nach Linie V-V der Fig. 3.

Der dargestellte Rückspülfilter weist zwei parallele, aufrechtstehende Filterkammern 1 mit darin angeordneten Filtereinsätzen in Gestalt von langgestreckten Filterkerzen 2 und ein von einem Schaltgehäuse 3 gebildetes, aus einem Gußteil bestehendes, die Filterkammern 1 tragendes Gehäuse auf. Bestandteil des Schaltgehäuses 3 ist ein unteres Gehäuseteil 4, das an der Unterseite des Schaltgehäuses z.B. über eine Flanschverbindung lösbar angeschlossen ist und den Gehäusefuß bildet. Jede Filterkammer 1 nimmt eine Gruppe von z.B. sechs oder mehr parallel angeordneten Filterkerzen 2 auf. Die Filterkerzen bestehen z.B. aus Metallspiralen, auf die Filtergewebestrümpfe aufgezogen sind.

Das Schaltgehäuse 3 weist vertikal übereinander einen Trübeeinlaß 5, einen Filtratauslaß 6 und einen Schlammauslaß 7 auf. Der Einlaß 5 für das zu filternde Medium liegt oberhalb des Filtratauslasses 6, der Schlammauslaß 7 unterhalb des Filtratauslasses 6 am Gehäuseunterteil 4. Letzteres nimmt ein horizontal liegendes Schlammablaßventil 8 auf, das weiter unten noch näher beschrieben wird. Im Schaltgehäuse 3 ist ein um eine Vertikalachse drehbares, nach Art eines Drehschiebers ausgebildetes Schaltorgan 9 angeordnet, mit dem die Filterkammern 1 wechselweise vom Filterbetrieb auf Rückspülbetrieb und umgekehrt umschaltbar sind. Der Innenraum des Schaltgehäuses 3 ist unterteilt in einen oberen Trüberaum 10, der mit dem Trübeeinlaß 5 verbunden ist, und einem unteren, den Filtratauslaß 6 aufweisenden Filtratraum 11. Das Schaltorgan 9 weist zwischen den beiden vorgenannten Räumen einen kolbenartigen Ansatz 12 auf, mit dem es sich in einer Bohrung des Schaltgehäuses führt. Der Kolbenansatz 12 ist mit einer Umfangsdichtung 13 versehen. Ferner weist das Schaltorgan 9 am unteren Ende einen Fußflansch 14 od.dgl. auf, mit dem es sich in einer Gehäusebohrung 15 führt. Am oberen Ende ist das Schaltorgan 9 mit seiner Welle 16 durch eine Axialbohrung eines Kopfdeckels 17 hindurchgeführt und in dieser bei 18 gelagert. Der Kopfdeckel 17 verschließt das Schaltgehäuse 3 an der Oberseite; er ist z.B. durch Verschraubung 19 lösbar am Schaltgehäuse 3 befestigt. Der Kopfdeckel 17 trägt einen Schaltantrieb 20 zur Schaltung des Schaltorgans 9. Dieser besteht aus einem Dreh- bzw. Schwenkantrieb, im vorliegenden Fall aus einem pneumatischen Drehantrieb mit zugeordneter Magnetventilvorrichtung 21 für die Umsteuerung des Schaltorgans 9. Das Ende der Schaltwelle 16 des Schaltorgans 9 weist einen Vierkant 22 auf, der die Drehverbindung mit dem Schaltantrieb herstellt.

Insbesondere dann, wenn der Rückspülfilter mit mehr als nur zwei Filterkammern 1 bestückt ist, empfiehlt es sich, als Schaltantrieb einen Elektromotor zu verwenden, der das Schaltorgan 9 vorzugsweise in Abhängigkeit von der Druckdifferenz zwischen Filtereinlaß und Filterauslaß umsteuert, um auf diese Weise die Filterkammern in Aufeinanderfolge von Filterbetrieb auf Rückspülbetrieb und umgekehrt zu schalten. Das Schaltorgan 9 trennt demgemäß die abzureinigende Filterkammer 1 vom Filterkreislauf ab, so daß anschließend die Rückspülung dieser Filterkammer automatisch eingeleitet werden kann.

Das den oberen Trüberaum 10 von dem unteren Filtratraum 11 trennende Schaltorgan 9 weist einen axialen Innenkanal 23 auf, der im Rückspülbetrieb die Verbindung zum Schlammablaß 7 herstellt und der am unteren Ende mit einem zum Schlammablaßventil 8 führenden Verbindungskanal 24 des Schaltgehäuses bzw. seines Gehäuseunterteils 4 in Verbindung steht. In Höhe des Trüberaumes 10 weist das Schaltorgan 9 am Umfang eine Steueröffnung 25 zur Ansteuerung der zu den Filterkammern führenden Kanäle 26 des Schaltgehäuses 3 auf. Der Innenkanal 23 endet oberhalb der Steueröffnung 25 in einem im Durchmesser verbreiterten Kopfraum, der einen Luftpufferraum 27 bildet. Die Verbindung des unteren Filtratraumes 11 mit den beiden Filterkammern 1 erfolgt jeweils über einen schräg ansteigenden Kanal 28, der zur Unterseite der zugeordneten Filterkammer 1 bzw. des hierin befindlichen Filtereinsatzes 2 führt. An den Trüberaum 10 ist im Filterbetrieb die betreffende Filterkammer 1 über ihren Kanal 26 angeschlossen. Bei mehr als zwei Filterkammern 1 sind sämtliche im Filterbetrieb stehenden Filterkammern 1 über ihre Kanäle 26 mit dem Trüberaum 10 verbunden, entsprechend über ihre Kanäle 28 mit dem Filtratraum 11.

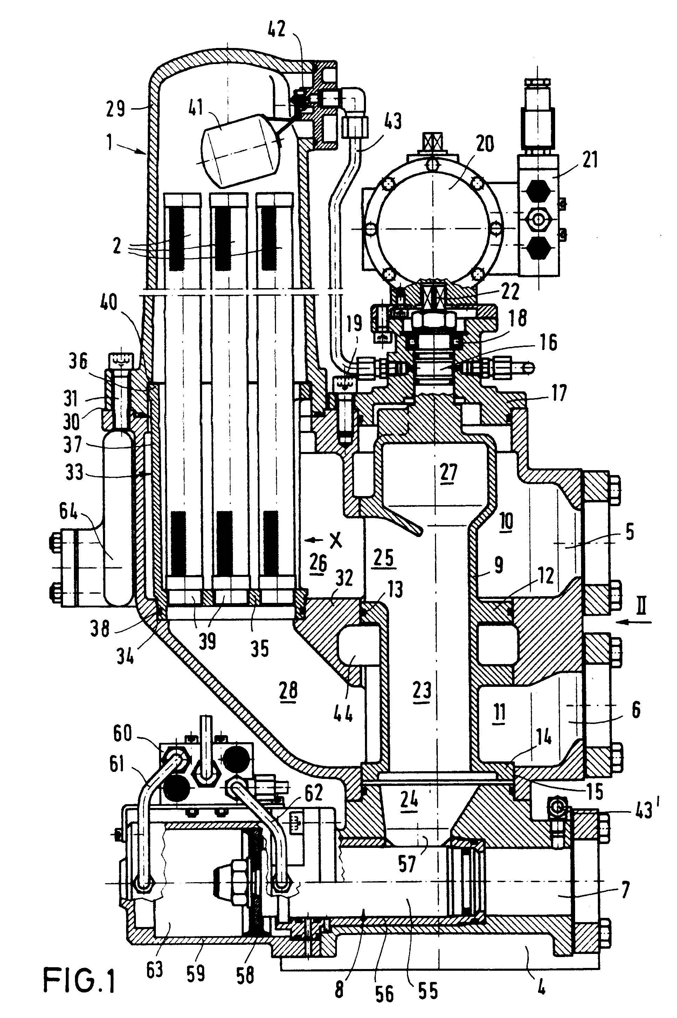

Die in den einzelnen Filterkammern 1 befindlichen Filterkerzen 10, die den Filtereinsatz bilden, befinden sich im oberen Bereich im Inneren einer Gehäusehaube 29, die mit ihrem Fuß an der Trennebene 30 mittels Schrauben 31 an der Oberseite des Schaltgehäuses 3 lösbar angeschlossen ist. Wie Fig. 1 zeigt, tauchen die Filtereinsätze bzw. die Filterkerzen 2 von oben in die die Kanäle 26 bildenden Innenräume des Schaltgehäuses 3 ein, wobei sie auf einer Länge, die mindestens etwa einem Drittel oder ihrer halben Länge entspricht, im Inneren des Schaltgehäuses 3 bzw. der betreffenden Kammer liegen. Die Trennebene 30 zwischen dem Schaltgehäuse 3 und den abnehmbaren Gehäusehauben 29 liegt demgemäß im Abstand oberhalb der unteren Enden der Filterkerzen 2. Diese tauchen so tief in das Schaltgehäuse 3 ein, daß ihre unteren Enden mindestens etwa in Höhe des Trüberaumes 10 und des Trübeeinlasses 5 liegen, vorzugsweise, wie dargestellt, etwa in Höhe der von der Gehäusewand 32 gebildeten unteren Begrenzung des Trüberaumes 10.

Die Filterkerzen 2 sind in jeder Filterkammer 1 an einem Kerzenhalter 33 gelagert, der im Abstand unterhalb der Trennebene 30 in einem Halterlager 34, das aus einer Steckfassung od.dgl. besteht, lose, d.h. bei entfernter Gehäusehaube 29 frei nach oben abhebbar abgestützt ist. Das Halterlager 34 besteht aus einer Ausdrehung der Gehäusewandung 32 am Übergang des Kanals 28 zu dem Raum 26. Die Halter 33 ragen nach oben über die Trennebene 30 bis in die Gehäusehauben 29. Sie bestehen aus einem korbförmigen Gebilde, das von einem plattenförmigen Fußstück 35, einem im Abstand darüber angeordneten, den Filtereinsatz bzw. die Filterkerzen umschließenden Kopfring 36 und die beiden Teile 35 und 36 im Umfangsabständen verbindenden Stegteilen 37 gebildet wird. Die Filterkerzen 2 sind mit ihren unteren Fußenden 39 in Bohrungen des plattenförmigen Fußstücks eingesetzt und in diesen z.B. durch Verschraubung festgelegt. Der Halter 33 stützt sich mit dem Fußstück 35 in der Steckfassung 34 ab und ist mittels eines Dichtringes 38 in der Steckfassung abgedichtet. Die Gehäusehauben 29 weisen jeweils eine Innenschulter 40 auf, die sich beim Anschrauben der Gehäusehauben am Schaltgehäuse 3 von oben gegen den Kopfring 36 legt, wodurch der Halter 37 mit den hieran befestigten Filterkerzen 2 festgelegt wird.

Nach Lösen und Entfernen der Gehäusehauben 29 lassen sich die oben aus dem Schaltgehäuse 3 herausragenden Halter 37 mit den angebauten Filterkerzen 2 nach oben aus dem Schaltgehäuse 3 herausheben. Damit ist ein leichtes Auswechseln der Filtereinsätze gegeben. Da die Höhe der Gehäusehauben 29 kleiner ist als die Länge der Filtereinsätze, lassen sich die Gehäusehauben 29 nach Lösen der Schrauben 31 ohne die Gefahr einer Beschädigung der Filtereinsätze auch dann leicht abnehmen, wenn am Einsatzort des Rückspülfilters über diesem nur eine beschränkte Freihöhe zur Verfügung steht.

Im Kopfraum der Gehäusehauben 29 ist, wie bekannt, ein von einem Schwimmer 41 gesteuertes Entlüftungsventil 42 angeordnet, das mit seinem Ausgang an eine Sammelleitung 43 angeschlossen ist. An die Sammelleitung 43 sind sämtliche Filterkammern 1 mit ihren Entlüftungsventilen 42 angeschlossen. Beim Auffüllen der Filterkammern mit Flüssigkeit werden die Entlüftungsventile 42, wie bekannt, durch ihre Schwimmer 41 geschlossen. Die gemeinsame Sammelleitung 43 kann, wie in Fig. 1 bei 43′ gezeigt, an den Schlammablaß 7 angeschlossen werden.

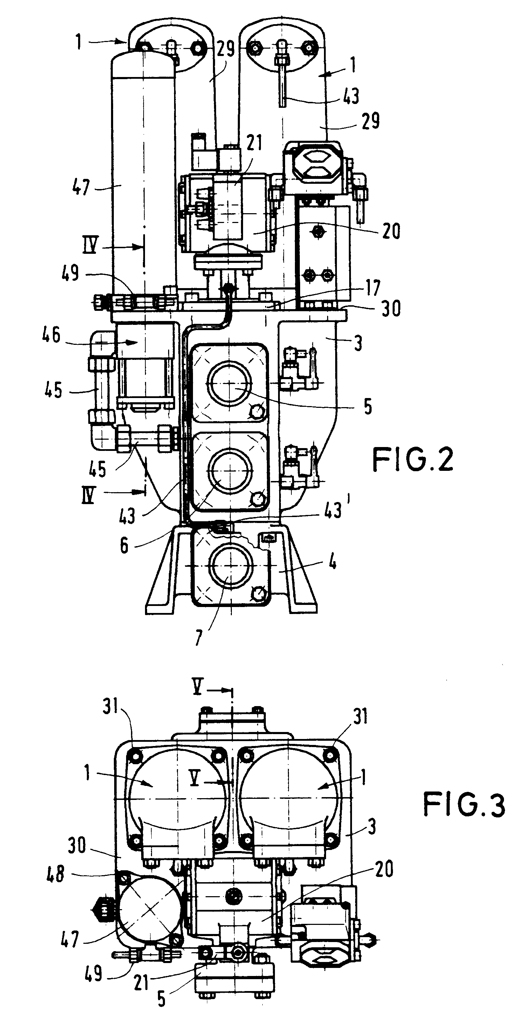

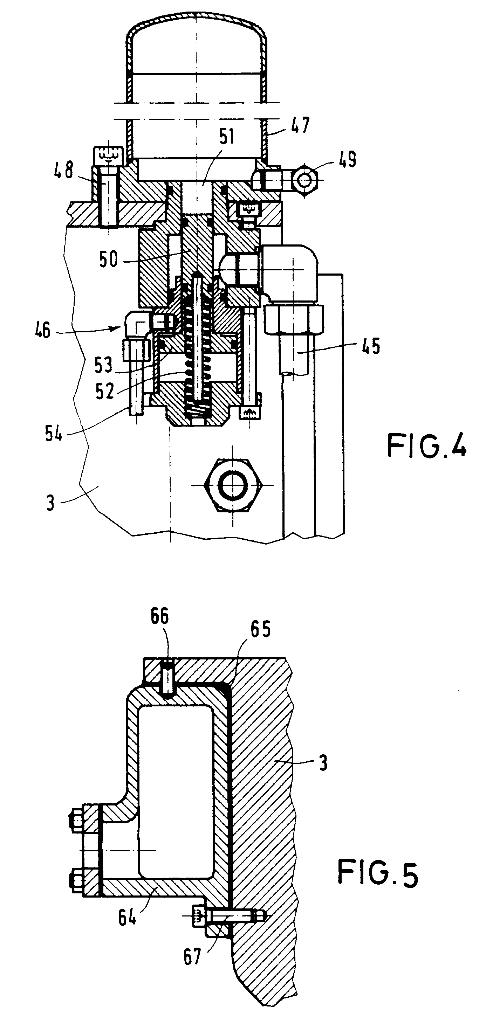

Im Schaltgehäuse 3 ist im Bereich der Zwischenwand 32 unterhalb des Kolbenansatzes 12 des Schaltorgans 9 ein letzteres umschließender Umfangsraum 44 vorgesehen, der oberhalb der den Filtratraum 11 mit den Filterkammern 1 verbindenden Anschlußkanäle 28 angeordnet ist und der im Rückspülbetrieb in Verbindung mit dem Filtratraum 11 bzw. mit dem Anschlußkanal 28 der rückzuspülenden Filterkammer 1 steht. Der Umfangsraum 44 ist an eine Druckgaszuführung angeschlossen. Diese ist in Fig. 1 nicht gezeigt. Die Fig. 2 bis 4 zeigen die der Druckgaszuführung dienende Leitung 45 zusammen mit einem Spülventil 46, das an der Unterseite eines Druckgas-Speicherbehälters 47 angeordnet ist, der bei dem gezeigten Ausführungsbeispiel auf dem Schaltgehäuse 3 an dessen Trennebene 30 durch Verschraubung 48 lösbar angeschlossen ist. Der Speicherbehälter 47 kann auch an anderer Stelle des Schaltgehäuses angebaut werden. Er nimmt das zur Rückspülung verwendete Druckgas, im allgemeinen Druckluft, auf und ist über eine Leitung 49 mit dem Druckgas aufladbar. Wie vor allem Fig. 4 zeigt, besteht das der Druckgaszuführung dienende Spülventil 46 aus einem druckluftbetätigten Kolbenventil, dessen mit einer Kolbendichtung versehener Ventilkolben 50 einen am Fuß des Speicherbehälters 47 angeordneten Auslaß verschließt und von einer Feder 52 in Schließlage gedrückt wird. Der Ventilkolben 50 trägt einen Steuerkolben 53, der sich mit einer Kolbendichtung in einem Zylindergehäuse führt, an das eine Druckluftleitung 54 angeschlossen ist, über die Druckluft in den Ringraum unter dem Steuerkolben 53 eingeführt werden kann, um den Ventilkolben 50 gegen die Rückstellkraft der Feder 52 soweit aus der Bohrung 51 herauszuziehen, daß das im Speicherbehälter 47 befindliche Druckgas über die Leitung 45 in den Umfangsraum 44 (Fig.1) gelangen kann.

Das am Fuß des Schaltgehäuses 3 bzw. dessen Gehäuseunterteils 4 angeordnete Schlammablaßventil 8 besteht aus einem druckluftbetätigten Kolbenventil, dessen Ventilkolben 55 in der den Schlammablaß 7 bildenden Horizontalbohrung in einer Führungsbuchse 56 mit Kolbendichtung geführt ist, die eine Umfangsöffnung 57 aufweist, über die bei geöffnetem Schlammablaßventil die Verbindung zum Schlammablaß 7 hergestellt wird. Mit dem Ventilkolben 55 verbunden ist ein Steuerkolben 58, der sich mit einer leicht auswechselbaren Kolbendichtung in einem am Gehäuse seitlich lösbar angeschlossenen Zylinder 59 führt. Auf diesem sitzt ein elektromagnetisch betätigtes Schaltventil 60, das über Leitungen 61 und 62 mit den beiden Zylinderräumen zu beiden Seiten des Kolbens 58 verbunden ist, so daß bei Druckbeaufschlagung des Ringraumes auf der Kolbenseite des Kolbenventils und bei gleichzeitiger Entlüftung des Zylinderraumes 63 das Schlammablaßventil öffnet und damit die Verbindung zum Schlammablaß 7 herstellt. Das gesamte Schlammablaßventil 8 bildet eine seitlich am Gehäuse 3 angeschlossene, bei Bedarf leicht vom Gehäuse abnehmbare Baueinheit.

Im Filterbetrieb strömt die zu filternde Trübe über den Trübeeinlaß 5 in den Trüberaum 10 und von hier zu der oder zu den auf Filterbetrieb geschalteten Filterkammern 1. Die Trübe strömt in Pfeilrichtung X in die betreffende Kammer 26, durchströmt dann die Filterkerzen 2 von außen nach innen, wobei die Verunreinigungen ausgefiltert werden. Das Filtrat strömt dann in den Filterkerzen 2 nach unten und durch die verhältnismäßig großen offenen Fußenden 39 der Filterkerzen über den Kanal 28 in den Filtratraum 11 und von hier zum Filtratauslaß 6. Die Rückspülung erfolgt, wie bekannt, im Gegenstrom.

In Fig. 1 ist das Schaltorgan 9 für die hier gezeigte Filterkammer 1 auf Rückspülbetrieb geschaltet. Dabei trennt das Schaltorgan 9 die abzureinigende Filterkammer 1 vom Filterkreislauf ab. Unmittelbar nach Umschaltung des Schaltorgans 9 mit Hilfe des Schaltantriebs 20 setzt die automatische Rückspülung ein. Dabei wird die vom Trübeeinlaß 5 und vom Filtratauslaß 6 abgesperrte Filterkammer druckentspannt, indem zunächst das Schlammablaßventil 8 geöffnet wird, wodurch die Verbindung des Innenkanals 23 des Schaltorgans 9 und des Raumes 26 an der Außenseite der Filterkerzen 2 mit dem Schlammablauf 7 hergestellt wird. Im oberen Pufferraum 27 des Schaltorgans 9 befindet sich ein Druckluftpolster, das von oben auf die Flüssigkeitssäule im Innenkanal 23 wirkt und bei Einleitung des Spülvorgangs zu einer Entspannung und Teilentleerung der zu spülenden Filterkammer auf der zu dem Schlammablaß 7 führenden Abströmseite beiträgt. Damit wird zu Beginn der Rückspülung der Druck auf der genannten Abströmseite schlagartig bis auf Atmosphärendruck abgebaut. Kurzzeitig nach dem Öffnen des Schlammablaßventils 8 wird durch Öffnen des Spülventils 46 Druckgas vom Speicherbehälter 47 in den Umfangsraum 44 eingeleitet. Das Druckgas wirkt auf die unter ihm im Kanal 28 stehende Filtratflüssigkeit und beschleunigt diese schlagartig in Rückspülrichtung. Das sich explosionsartig entspannende Druckgas drückt das sich auf der Sauberseite der Filterkerzen 2 befindliche Spülfiltrat mit hoher Geschwindigkeit durch das Filtergewebe der Filterkerzen 2, wobei die am Filtergewebe anhaftenden Feststoff-Verunreinigungen gelöst und von der Spülflüssigkeit mitgenommen und durch das geöffnete Schlammablaßventil 8 aus dem Filter über den Schlammablaß 7 herausgespült werden. Nach einer kurzen Nachblaszeit kann das Schlammablaßventil 8 und das Druckgas-Speiseventil 46 automatisch wieder geschlossen werden. Gleichzeitig wird die leergeblasene Filterkammer über einen Auffüllkanal mit einer kontrollierten Menge der gefilterten Flüssigkeit bis zur automatischen Entlüftung aufgefüllt. Der genannte Auffüllkanal, der aus einer kleinen Bohrung am Schaltorgan 9 bestehen kann, ist in Fig. 1 nicht gezeigt. Nach dem Auffüllen der leergeblasenen Filterkammer kann durch Schaltbetätigung des Schaltorgans 9 die abgereinigte Filterkammer auf Filterbetrieb geschaltet werden.

Aufgrund der Verwendung von Druckgas (Druckluft) für die Rückspülung und die kontrollierte Auffüllung der abgereinigten Filterkammer erfolgt keine Absenkung des Systemdrucks während des Rückspülvorgangs. Die für die Rückspülung verwendete Spülflüssigkeit kann, wie bekannt, gefiltert und zurückgewonnen werden.

Wie Fig. 1 zeigt, zeichnet sich der erfindungsgemäße Rückspülfilter durch vergleichsweise einfachen Aufbau, durch kompakte Bauweise und durch leichte Zugänglichkeit der verschiedenen Funktionsteile aus, so daß auch die Wartung des Rückspülfilters sich einfach gestaltet. Vorteilhaft sind auch die kurzen inneren Strömungswege und die großen Strömungsquerschnitte, die in allen Bereichen nicht kleiner sind als am Filtereinlaß. Die kompakte Bauweise des Rückspülfilters ermöglicht es, die zur Verfügung stehende Filterfläche beträchtlich zu erhöhen, ohne daß das Bauvolumen des Rückspülfilters gegenüber den bekannten Filtern dieser Art vergrößert wird. Das Schaltgehäuse 3 des Filters zeichnet sich durch einfache Formgestalt aus und läßt sich daher kostengünstig als Gußteil herstellen. Auf die Verwendung des Druckgas-Speicherbehälters 47 kann verzichtet werden, wenn am Einsatzort des Rückspülfilters eine ausreichende Druckluftversorgung zur Verfügung steht. Wie Fig. 5 zeigt, lassen sich am Schaltgehäuse 3 außenseitig Heizelemente 64 anbauen. Das Schaltgehäuse 3 erhält hierbei zweckmäßig an seiner Außenseite durch angeformte Gehäuseeinziehungen 65 gebildete Aufnahmetaschen für angepaßte Heizelemente 64, die im Heizbetrieb von einem Heizmedium (Dampf, Thermoöl od.dgl.) durchströmt werden. Die Verbindung der Heizelemente 64 mit dem Schaltgehäuse 3 kann durch Verstiftung 66 und/oder mittels Schrauben 67 od.dgl. erfolgt. Fig. 1 zeigt ein einzelnes Heizelement 64 in seiner Lage am Umfang des Schaltgehäuses 3 im Bereich der Filterkammer 1.

## Patentansprüche

1. Rückspülfilter mit mindestens zwei, mit druckgasbeaufschlagtem Spülfiltrat rückspülbaren, die Filtereinsätze (2) aufnehmenden Filterkammern (1), die aufrechtstehend an einem gemeinsamen Schaltgehäuse (3) angeordnet sind und lösbar mit dem Schaltgehäuse (3) verbundene Gehäusehauben (29) aufweisen,
mit einem im Schaltgehäuse (3) angeordneten, an einen Trübeeinlaß (5) angeschlossenen Trüberaum (10) und einem ebenfalls im Schaltgehäuse (3) angeordneten, an einem Filtratauslaß (6) angeschlossenen Filtratraum (11), wobei der Trüberaum (10) und der Filtratraum (11) übereinander im Schaltgehäuse (3) angeordnet sind,
mit einem unterhalb des Trübe- und Filtratraumes (10, 11) angeordneten Schlammauslaß (7) mit zugeordnetem, durch eine Betätigungsvorrichtung betätigbaren Schlammablaßventil (8), mit einem von einem Schaltantrieb (20) betätigten, nach Art eines Drehschiebers ausgebildeten und um eine Vertikalachse drehbaren Schaltorgan (9), das im Schaltgehäuse (3) den Trüberaum (10) vom Filtratraum (11) trennt, in Höhe des Trüberaumes (10) an seinem Umfang eine Steueröffnung (25) zur Ansteuerung der zu den Filterkammern (1) führenden Kanäle (26) aufweist, und dessen axialer Innenkanal (23) an seinem unteren Ende mit einem zum Schlammablaßventil (8) führenden Verbindungskanal (24) in Verbindung steht, wobei mit Hilfe des Schaltorgans (9) die Filterkammern (1) in Aufeinanderfolge vom Filterbetrieb auf Rückspülbetrieb und umgekehrt umschaltbar sind,
und mit einem Spülventil (46) zur Druckgasbeaufschlagung des Rückspülfiltrats in der auf Rückspülbetrieb geschalteten Filterkammer (1), **gekennzeichnet durch** folgende Merkmale:
- der Trüberaum (10) ist oberhalb des Filtratraumes (11) im Schaltgehäuse (3) angeordnet;
- die Filtereinsätze (2) tauchen bis mindestens etwa in Höhe des Trüberaumes (10) in das Schaltgehäuse (3) ein, wobei die Trennebene (30) zwischen dem Schaltgehäuse (3) und den Gehäusehauben (29) der Filterkammern (1) im Abstand oberhalb der unteren Enden der Filtereinsätze (2) liegt;
- im Schaltgehäuse (3) ist ein in offener Verbindung mit dem Filtratraum (11) stehender, das Schaltorgan (9) umschließender und an die äußere Druckgaszuführung angeschlossener Umfangsraum (44) oberhalb der Stellen, an denen die zu dem Filterkammern (1) führenden Anschlußkanäle (28) an den Filtratraum (11) anschließen, angeordnet;
- das Schlammablaßventil (8) ist zusammen mit seiner Betätigungsvorrichtung unterhalb des Trübeeinlasses (5) und des Filtratauslasses (6) am Schlammauslaß (7) angeordnet.

2. Rückspülfilter nach Anspruch 1, **dadurch gekennzeichnet,** daß die Filtereinsätze (2) um mindestens etwa 1/3 bis 1/2 ihrer Länge in das Schaltgehäuse (3) eintauchen.

3. Rückspülfilter nach Anspruch 1 oder 2, **dadurch gekennzeichnet,** daß das Schlammablaßventil (8) in einem mit dem Schaltgehäuse (3), vorzugsweise durch Verschraubung, lösbar verbundenen Gehäuseunterteil (4) angeordnet ist.

4. Rückspülfilter nach einem der Ansprüche 1-3, **dadurch gekennzeichnet,** daß das Schlammablaßventil (8) aus einem druckluftbetätigten Kolbenventil besteht, das als Baueinheit an dem mit dem Schlammauslaß (7) versehenen Schaltgehäuse (3) bzw. seinem Gehäuseunterteil (4) lösbar und seitlich abziehbar angeschlossen ist.

5. Rückspülfilter nach einem der Ansprüche 1-4, **dadurch gekennzeichnet,** daß etwa in der Trennebene (30) zwischen dem Schaltgehäuse (3) und den Gehäusehauben (29) der Filterkammern (1) ein von der Welle (16) des Schaltorgans (9) unter Abdichtung durchgriffener Kopfdeckel (17) am Schaltgehäuse (3) lösbar angeordnet ist, der den Schaltantrieb (20) trägt.

6. Rückspülfilter nach einem der Ansprüche 1-5, **dadurch gekennzeichnet,** daß die Filtereinsätze (2) jeweils mit einem Halter (33) verbunden sind, der im Abstand unterhalb der Trennebene (30) zwischen dem Schaltgehäuse (3) und den Gehäusehauben (29) in Halterlagern des Schaltgehäuses, vorzugsweise in Gestalt von Steckfassungen (34) o.dgl., unter Abdichtung (38) nach oben abhebbar abgestützt sind.

7. Rückspülfilter nach Anspruch 6, **dadurch gekennzeichnet,** daß die Halter (33) nach oben über die Trennebene (30) zwischen dem Schaltgehäuse (3) und den Gehäusehauben (29) bis in die Gehäusehauben aufragen, die mit sich von oben gegen die Halter (33) legenden Anschlägen (40) o.dgl. versehen sind.

8. Rückspülfilter nach Anspruch 6 oder 7, **dadurch gekennzeichnet,** daß die Halter (33) nach Art eines Korbes ausgebildet sind.

9. Rückspülfilter nach Anspruch 8, **dadurch gekennzeichnet,** daß die korbförmigen Halter (33) aus einem den Filtereinsatz (2) tragenden, im Halterlager (34) des Schaltgehäuses (3) abgestützten Fußstück und einem den Filtereinsatz umschließenden Kopfring (36) sowie das Fußstück und den Kopfring verbindenden axialen Stegteilen (3) bestehen.

10. Rückspülfilter nach einem oder mehreren der Ansprüche 1-9, **dadurch** **gekennzeichnet,** daß im Schaltorgan (9) ein im Spülbetrieb über das geöffnete Schlammablaßventil (8) mit dem Schlammauslaß (7) in Verbindung stehender Luftpufferraum (27) angeordnet ist.

11. Rückspülfilter nach Anspruch 10, **dadurch gekennzeichnet,** daß der Luftpufferraum (27) von einem Kopfraum des Schaltorgans (9) gebildet ist und mit dem der Schlammableitung dienenden Axialkanal (23) des Schaltorgans verbunden ist, wobei der Luftpufferraum (27) oberhalb der den axialen Innenkanal (23) mit der rückzuspülenden Filterkammer verbindenden umfangsseitigen Steueröffnung (25) angeordnet ist.

## Claims

1. A reversible flow filter with at least two filter chambers (1) which accommodate the filter elements (2) and which can be back-flushed with flushing filtrate acted upon by compressed gas, which filter chambers are disposed upright on a common switching housing (3) and which have housing caps (29) detachably connected to the switching housing (3),
with a suspension space (10) disposed in the switching housing (3) and connected to a suspension inlet (5) and a filtrate space (11) which is likewise disposed in the switching housing (3) and which is connected to a filtrate outlet (6), wherein the suspension space (10) and the filtrate space (11) are disposed one above the other in the switching housing (3),
with a sludge outlet (7) disposed underneath the suspension and filtrate spaces (10, 11) with an associated sludge discharge valve (8) which can be operated by an operating device, with a switching element (9) which is operated by a switching driving mechanism (20) and which separates the suspension space (10) from the filtrate space (11) in the switching housing (3), which switching element is constructed in the manner of a rotary slide valve, is rotatable about a vertical axis and has a control opening (25) at its periphery at the height of the suspension space (10) for selecting the channels (26) leading to the filter chambers (1), the internal axial channel (23) of which switching element is connected at its lower end to a connecting channel (24) leading to the sludge discharge valve (8), wherein the filter chambers (1) can be switched over successively by means of the switching element (9) from filter operation to back-flushing operation and vice versa,
and with a flushing valve (46) for the admission of compressed gas to the back-flushing filtrate in the filter chamber (1) switched to back-flushing operation, characterised by the following features:
- the suspension space (10) is disposed above the filtrate space (11) in the switching housing (3);
- the filter elements (2) dip into the switching housing (3) at least approximately as far as the level of the suspension space (10), wherein the separating plane (30) between the switching housing (3) and the housing caps (29) of the filter chambers (1) is located at a distance above the lower ends of the filter elements (2);
- a peripheral space (44) is disposed in the switching housing (3) above the locations at which the connecting channels (28) leading to the filter chambers (1) adjoin the filtrate space (11), which peripheral space is openly connected to the filtrate space (11), surrounds the switching element (9) and is connected to the external compressed gas supply;
- the sludge discharge valve (8) together with its operating device is disposed on the sludge outlet (7) below the suspension inlet (5) and below the filtrate inlet (6).

2. A reversible flow filter according to claim 1, characterised in that the filter elements (2) dip into the switching housing (3) by at least about 1/3 to 2/3 of their length.

3. A reversible flow filter according to claim 1 or 2, characterised in that the sludge discharge valve (8) is disposed in a housing lower part (4) which is detachably connected, preferably by screwing on, to the switching housing (3).

4. A reversible flow filter according to any one of claims 1 - 3, characterised in that the sludge discharge valve (8) consists of a plunger valve operated by compressed air, which is connected as a modular unit, detachably and so that it can be pulled off laterally, to the switching housing (3) provided with the sludge outlet (7) or to its housing lower part (4).

5. A reversible flow filter according to any one of claims 1 - 4, characterised in that a top cover (17), through which the shaft (16) of the switching element (9) penetrates with sealing, is detachably connected, approximately in the separating plane (30) between the switching housing (3) and the housing caps (29) of the filter chambers (1), to the switching housing (3), which supports the switching driving mechanism (20).

6. A reversible flow filter according to any one of claims 1 - 5, characterised in that the filter elements (2) are attached in each case to a holder (33) which can be lifted off upwards and is supported with sealing (38) at a distance below the separating plane (30) between the switching housing (3) and the housing caps (29) in holder mountings in the switching housing, preferably in the form of plug-in sockets (34) or the like.

7. A reversible flow filter according to claim 6, characterised in that the holders (33) project upwards into the housing caps (29) above the separating plane (30) between the switching housing (3) and the housing caps (29), which housing caps are provided with stops (40) or the like resting against the holders (33) from above.

8. A reversible flow filter according to claim 6 or 7, characterised in that the holders (33) are constructed in the manner of a basket.

9. A reversible flow filter according to claim 8, characterised in that the basket-like holders (33) consist of a base part which supports the filter element (2) and which is supported in the holder mounting (34) of the switching housing (3) and a top ring (36) surrounding the filter element, and of axial web parts (3) connecting the base part and the top ring.

10. A reversible flow filter according to one or more of claims 1 - 9, characterised in that an air buffer space (27), which in flushing operation is connected to the sludge outlet (7) via the opened sludge discharge valve (8), is disposed in the switching element (9).

11. A reversible flow filter according to claim 10, characterised in that the air buffer space (27) is formed from a head-space of the switching element (9) and is connected to the axial channel (23) of the switching element serving as the sludge discharge, wherein the air buffer space (27) is disposed above the peripheral control opening (25) connecting the internal axial channel (23) to the filter chamber to be back-flushed.

## Revendications

1. Filtre à rinçage à contre-courant, comprenant au moins deux chambres de filtrage (1) qui peuvent être rincées à contre-courant avec du filtrat de rinçage soumis à un gaz comprimé, qui abritent les cartouches filtrantes (2) et qui sont montées verticalement sur un carter de commutation commun (3) et comportent des capots de carter (29) reliés de manière amovible au carter de commutation (3), comprenant une chambre de fluide trouble (10), disposée dans le carter de commutation (3) et reliée à une entrée de fluide trouble (5), et une chambre de filtrat (11) disposée elle aussi dans le carter de commutation (3) et reliée à une sortie de filtrat (6), la chambre de fluide trouble (10) et la chambre de filtrat (11) étant disposées l'une au-dessus de l'autre dans le carter de commutation (3), comprenant une sortie de boue (7) qui est disposée en dessous des chambres de fluide trouble et de filtrat (10, 11) et à laquelle est associée une vanne de sortie de boue (8) pouvant être manoeuvrée par un dispositif d'actionnement, comprenant un organe de commutation (9) qui est actionné par un dispositif d'entraînement de commutation (20), est conçu à la manière d'un tiroir tournant et peut tourner autour d'un axe vertical, et qui, dans le carter de commutation (3), sépare la chambre de fluide trouble (10) de la chambre de filtrat (11), comporte, à la hauteur de la chambre de fluide trouble (10), sur sa circonférence, une ouverture de commande (25) pour alimenter les canaux (26) mettant aux chambres de filtrage (1), et dont le canal intérieur axial (23) est relié, au niveau de son extrémité inférieure, à un canal de liaison (24) menant à la vanne de sortie de boue (8), l'organe de commutation (9) permettant de commuter successivement les chambres de filtrage (1) du mode de filtrage au mode de rinçage à contre-courant et inversement, et comprenant une vanne de rinçage (46) pour soumettre le filtrat de rinçage à contre-courant à un gaz comprimé dans la chambre de filtrage (1) commutée en mode de rinçage à contre-courant, caractérisé en ce que :
- la chambre de fluide trouble (10) est disposée au-dessus de la chambre de filtrat (11) dans le carter de commutation (3) ;
- les cartouches filtrantes (2) plongent dans le carter de commutation (3) au moins approximativement jusqu'à la hauteur de la chambre de fluide trouble (10), le plan de séparation (30) entre le carter de commutation (3) et les capots de carter (29) des chambres de filtrage (1) se trouvant à distance au-dessus des extrémités inférieures des cartouches filtrantes (2) ;
- dans le carter de commutation (3) est ménagée une chambre périphérique (44) qui est en communication ouverte avec la chambre de filtrat (11), qui entoure l'organe de commutation (9), qui est reliée à l'alimentation extérieure en gaz comprimé et qui est située au-dessus des endroits où les canaux de raccordement (28) menant aux chambres de filtrage (1) sont reliés à la chambre de filtrat (11) ;
- la vanne de sortie de boue (8) est disposée, avec son dispositif d'actionnement, en dessous de l'entrée de fluide trouble (5) et de la sortie de filtrat (6), et au niveau de la sortie de boue (7).

2. Filtre de rinçage à contre-courant selon la revendication 1, caractérisé en ce que les cartouches filtrantes (2) plongent dans le carter de commutation (3) sur au moins environ 1/3 à 1/2 de leur longueur.

3. Filtre de rinçage à contre-courant selon la revendication 1 ou 2, caractérisé en ce que la vanne de sortie de boue (8) est disposée dans la partie inférieure de carter (4), qui est reliée au carter de commutation (3) de manière amovible, de préférence par vissage.

4. Filtre de rinçage à contre-courant selon l'une des revendications 1 à 3, caractérisé en ce que la vanne de sortie de boue (8) est constituée d'une vanne à piston qui est actionnée par de l'air comprimé et qui est reliée, sous la forme d'une unité structurelle, au carter de commutation (3) muni de la sortie de boue (7) ou à la partie inférieure de carter (4), de manière amovible et extractible latéralement.

5. Filtre de rinçage à contre-courant selon l'une des revendications 1 à 4, caractérisé en ce que, sensiblement dans le plan de séparation (30) entre le carter de commutation (3) et les capots de carter (29) des chambres de filtrage (1), un couvercle formant tête (17), qui est traversé de manière étanche par l'arbre (16) de l'organe de commutation (9) et qui porte le dispositif d'entraînement de commutation (20), est monté de manière amovible sur le carter de commutation (3).

6. Filtre de rinçage à contre-courant selon l'une des revendications 1 à 5, caractérisé en ce que les cartouches filtrantes (2) sont chacune reliées à un support (33) qui prend appui, à distance en dessous du plan de séparation (30) entre le carter de commutation (3) et les capots de carter (29), dans des porte-supports du carter de commutation, conçus de préférence sous la forme de manchons d'emboîtement (34) ou analogues, et qui forme un point d'étanchéité (38) et peut être retiré par le haut.

7. Filtre de rinçage à contre-courant selon la revendication 6, caractérisé en ce que les supports (33) dépassent vers le haut, au-dessus du plan de séparation (30) entre le carter de commutation (3) et les capots de carter (29), jusque dans les capots de carter qui sont munis de butée (40) ou analogues prenant appui par le haut sur les supports (33).

8. Filtre de rinçage à contre-courant selon la revendication 6 ou 7, caractérisé en ce que les supports (33) sont conçus en forme de panier.

9. Filtre de rinçage à contre-courant selon la revendication 8, caractérisé en ce que les supports (33) en forme de panier sont constitués d'une pièce de pied, qui porte la cartouche filtrante (2) et prend appui dans le porte-support (34) du carter de commutation (3), et d'un anneau de tête (36) qui entoure la cartouche filtrante, ainsi que de parties axiales formant barrettes (3) qui relient la pièce de pied et l'anneau de tête.

10. Filtre de rinçage à contre-courant selon une ou plusieurs des revendications 1 à 9, caractérisé en ce que, dans l'organe de commutation (9), est ménagée une chambre formant tampon d'air (27) qui, en mode de rinçage, communique avec la sortie de boue (7) par l'intermédiaire de la vanne ouverte de sortie de boue (8).

11. Filtre de rinçage à contre-courant selon la revendication 10, caractérisé en ce que la chambre formant tampon d'air (27) est formée par la chambre de tête de l'organe de commutation (9) et est reliée au canal axial (23) de l'organe de commutation, ledit canal axial servant à dériver la boue, la chambre formant tampon d'air (27) étant disposée au-dessus de l'ouverture de commande (25) qui est située sur le côté circonférentiel et qui relie le canal intérieur axial (23) à la chambre de filtrage que l'on veut rincer à contre-courant.
